# EUROPEAN PATENT APPLICATION

(11) **EP 4 641 765 A1**
(43) Date of publication of application: **29.10.2025**
(21) Application number: 23909147.3
(22) Date of filing: 26.07.2023
(51) Int. Cl.: H01M 10/615, B60L 58/27, B60L 58/10, H01M 10/625, H01M 10/633, H01M 10/637, H01M 10/635

(54) **BATTERY SELF-HEATING SYSTEM, CONTROL METHOD THEREFOR, AND ELECTRIC VEHICLE**

(30) Priority: 29.12.2022 CN 202211710967
(71) Applicant: BYD Company Limited, Shenzhen, Guangdong 518118 (CN)
(72) Inventor: LI, Jicheng, Shenzhen, Guangdong 518118 (CN); LUO, Xiang, Shenzhen, Guangdong 518118 (CN); WU, Jiaxiang, Shenzhen, Guangdong 518118 (CN); CUI, Ruibo, Shenzhen, Guangdong 518118 (CN); ZHAO, Bo, Shenzhen, Guangdong 518118 (CN)
(74) Representative: Wu, Ting
(86) International application number: PCT/CN2023/109293
(87) International publication number: WO 2024/139204

(57) **Abstract**

A battery self-heating system, a control method therefor, and an electric vehicle, wherein the battery self-heating system comprises: a three-phase motor, a battery pack, a three-phase inverter, and a switch module. The method for controlling the battery self-heating system comprises: acquiring battery pack temperature information; when according to the battery pack temperature information it is determined that the battery pack requires self-heating, obtaining voltage information between a first end and a second end of the switch module; according to the voltage information between the first end and the second end of the switch module, controlling the switch module to achieve self-heating of the battery pack; when according to the battery pack temperature information it is determined that the battery pack does not require self-heating, obtaining electric current information between the first end and the second end of the switch module; and according to the electric current information between the first end and the second end of the switch module, controlling the switch module to prevent self-heating of the battery pack.

## Description

### CROSS-REFERENCE TO RELATED APPLICATION

This application claims priority to and benefits of Chinese Patent Application No. 202211710967.X filed on December 29, 2022 and entitled "BATTERY SELF-HEATING SYSTEM, CONTROL METHOD THEREFOR, AND ELECTRIC VEHICLE", which is incorporated herein by reference in its entirety.

### FIELD

The present disclosure relates to a battery self-heating system, a control method therefor, and an electric vehicle.

### BACKGROUND

To ensure that an electric vehicle or a hybrid electric vehicle can run normally in a cold environment, a battery in the electric vehicle usually requires to be heated, to ensure that the battery can charge and discharge normally. However, if the battery is not accurately and effectively controlled in a self-heating process, a sintering phenomenon of a switchgear is possibly caused, so that effective self-heating control cannot be performed on the battery, greatly affecting running of the electric vehicle and use experience of the user.

### SUMMARY

The present disclosure is intended to solve one of technical problems in a related art at least to some extent. In view of this, an objective of the present disclosure is to provide a control method for a battery self-heating system, so that a battery can be accurately controlled to perform self-heating to ensure that the battery can normally perform a self-heating operation, and improve charging and discharging efficiency of the battery.

A second objective of the present disclosure is to provide a battery self-heating system.

A third objective of the present disclosure is to provide an electric vehicle.

To achieve the foregoing objectives, an embodiment of a first aspect of the present disclosure provides a control method for a battery self-heating system. The control method includes: temperature information of a battery pack is obtained, where the battery pack includes a first battery body and a second battery body, the first battery body and the second battery body are connected in series and have a first node, a three-phase inverter is respectively connected to the battery pack and a three-phase motor, a first end of a switch module is connected to the first node, and a second end of the switch module is connected to a neutral point of the three-phase motor; voltage information between the first end and the second end of the switch module is obtained when it is determined, according to the temperature information of the battery pack, that the battery pack requires self-heating; the switch module is controlled to be closed according to the voltage information between the first end and the second end of the switch module, and the three-phase inverter is controlled to enable the first battery body and the second battery body to alternately charge and discharge, to achieve self-heating of the battery pack; and current information between the first end and the second end of the switch module is obtained when it is determined, according to the temperature information of the battery pack, that the battery pack does not require self-heating; and the switch module is controlled to be opened according to the current information between the first end and the second end of the switch module.

According to the control method in this embodiment, the temperature information of the battery pack is obtained first, and then whether the battery pack requires self-heating is determined according to the temperature information; if the battery pack requires self-heating, the switch module is controlled to be closed according to the voltage between two ends of the switch module, to perform self-heating of the battery; and if the battery pack does not require self-heating, the switch module is controlled to be opened according to the current between two ends of the switch module, to prohibit self-heating of the battery. Therefore, the battery can be accurately controlled to perform self-heating to ensure that the battery can normally perform a self-heating operation, and improve charging and discharging efficiency of the battery.

In some embodiments, the switch module includes a first switch tube, a second switch tube, a first freewheeling diode, a second freewheeling diode, and a first contactor. A first end of the first switch tube is connected to the first node, and a second end of the first switch tube is connected to a second end of the second switch tube. A first end of the second switch tube is connected to one end of the first contactor, and the other end of the first contactor is connected to the neutral point of the three-phase motor. An anode of the first freewheeling diode is connected to the second end of the first switch tube, and a cathode of the first freewheeling diode is connected to the first end of the first switch tube. An anode of the second freewheeling diode is connected to the second end of the second switch tube, and a cathode of the second freewheeling diode is connected to the first end of the second switch tube.

In some embodiments, the switch module includes a first switch tube, a second switch tube, and a first contactor. A first end of the first switch tube is connected to a second end of the second switch tube and is connected to the first node, a second end of the first switch tube is connected to a first end of the second switch tube and is connected to one end of the first contactor, and the other end of the first contactor is connected to the neutral point of the three-phase motor.

In some embodiments, the switch module further includes a first freewheeling diode and a second freewheeling diode. An anode of the first freewheeling diode is connected to the second end of the second switch tube, and a cathode of the first freewheeling diode is connected to the first end of the first switch tube. An anode of the second freewheeling diode is connected to the second end of the first switch tube, and a cathode of the second freewheeling diode is connected to the first end of the second switch tube.

In some embodiments, the method further includes: the first contactor is controlled to be closed after it is determined, according to the temperature information of the battery pack, that the battery pack requires self-heating.

In some embodiments, that the switch module is controlled according to the voltage information between the first end and the second end of the switch module includes: the second switch tube is first controlled to be closed and then the voltage information between the first end and the second end of the switch module is obtained when it is determined, according to the voltage information, that a voltage between the first end and the second end of the switch module is greater than zero, and the first switch tube is controlled to be closed when it is determined that the voltage between the first end and the second end of the switch module is less than or equal to zero, or the first switch tube is first controlled to be closed and then the voltage information between the first end and the second end of the switch module is obtained when it is determined, according to the voltage information, that a voltage between the first end and the second end of the switch module is less than zero, and the second switch tube is controlled to be closed when it is determined that the voltage between the first end and the second end of the switch module is greater than or equal to zero; a target temperature of the battery pack is obtained when it is determined that the first switch tube and the second switch tube are both in a closed state; the three-phase inverter is controlled according to the target temperature of the battery pack to adjust an amplitude and a frequency of a self-heating current in the battery pack, and the battery pack is heated to the target temperature.

In some embodiments, the method further includes: a target self-heating current of the battery pack is set to zero after it is determined, according to the temperature information of the battery pack, that the battery pack does not require self-heating.

In some embodiments, that the switch module is controlled according to the current information between the first end and the second end of the switch module includes: the second switch tube is first controlled to be opened, and then the current information between the first end and the second end of the switch module is obtained when it is determined, according to the current information, that a current between the first end and the second end of the switch module is greater than zero, and the first switch tube is controlled to be opened when it is determined that the current between the first end and the second end of the switch module is less than a first preset current; the first switch tube is first controlled to be opened, and then the current information between the first end and the second end of the switch module is obtained when it is determined, according to the current information, that a current between the first end and the second end of the switch module is less than zero, and the first switch tube is controlled to be opened when it is determined that the current between the first end and the second end of the switch module is greater than a second preset current; and the first contactor is controlled to be opened when it is determined that both the first switch tube and the second switch tube are in an open state.

In some embodiments, the switch module includes a first switch tube, a second switch tube, a first freewheeling diode, a second freewheeling diode, and a first contactor. A first end of the first switch tube is connected to the first node, and a second end of the first switch tube is connected to a second end of the second switch tube. A first end of the second switch tube is connected to the neutral point of the three-phase motor. An anode of the first freewheeling diode is connected to the second end of the first switch tube, and a cathode of the first freewheeling diode is connected to the first end of the first switch tube. An anode of the second freewheeling diode is connected to the second end of the second switch tube, and a cathode of the second freewheeling diode is connected to the first end of the second switch tube.

In some embodiments, the switch module includes a first switch tube and a second switch tube. A first end of the first switch tube is connected to a second end of the second switch tube and is connected to the first node, and a second end of the first switch tube is connected to a first end of the second switch tube and is connected to the neutral point of the three-phase motor.

In some embodiments, the switch module further includes a first freewheeling diode and a second freewheeling diode. An anode of the first freewheeling diode is connected to the second end of the second switch tube, and a cathode of the first freewheeling diode is connected to the first end of the first switch tube. An anode of the second freewheeling diode is connected to the second end of the first switch tube, and a cathode of the second freewheeling diode is connected to the first end of the second switch tube.

In some embodiments, that the switch module is controlled according to the voltage information between the first end and the second end of the switch module includes: the second switch tube is first controlled to be closed and then the voltage information between the first end and the second end of the switch module is obtained when it is determined, according to the voltage information, that a voltage between the first end and the second end of the switch module is greater than zero, and the first switch tube is controlled to be closed when it is determined that the voltage between the first end and the second end of the switch module is less than or equal to zero, or the first switch tube is first controlled to be closed and then the voltage information between the first end and the second end of the switch module is obtained when it is determined, according to the voltage information, that a voltage between the first end and the second end of the switch module is less than zero, and the second switch tube is controlled to be closed when it is determined that the voltage between the first end and the second end of the switch module is greater than or equal to zero; a target temperature of the battery pack is obtained when it is determined that the first switch tube and the second switch tube are both in a closed state; the three-phase inverter is controlled according to the target temperature of the battery pack to adjust an amplitude and a frequency of a self-heating current in the battery pack, and the battery pack is heated to the target temperature.

In some embodiments, the method further includes: a target self-heating current of the battery pack is set to zero after it is determined, according to the temperature information of the battery pack, that the battery pack does not require self-heating.

In some embodiments, that the switch module is controlled according to the current information between the first end and the second end of the switch module includes: the second switch tube is first controlled to be opened, and then the current information between the first end and the second end of the switch module is obtained when it is determined, according to the current information, that a current between the first end and the second end of the switch module is greater than zero, and the first switch tube is controlled to be opened when it is determined that the current between the first end and the second end of the switch module is less than a third preset current, to enable both the first switch tube and the second switch tube to be in an open state; and the first switch tube is first controlled to be opened, and then the current information between the first end and the second end of the switch module is obtained when it is determined, according to the current information, that a current between the first end and the second end of the switch module is less than zero, and the second switch tube is controlled to be opened when it is determined that the current between the first end and the second end of the switch module is greater than a fourth preset current, to enable both the first switch tube and the second switch tube to be in an open state.

To achieve the foregoing objectives, an embodiment of a second aspect of the present disclosure provides a battery self-heating system. The battery self-heating system includes: a three-phase motor, a battery pack, a three-phase inverter, a switch module, and a control component. The battery pack includes a first battery body and a second battery body. The first battery body and the second battery body are connected in series and have a first node. The three-phase inverter is respectively connected to the battery pack and the three-phase motor. A first end of the switch module is connected to the first node, and a second end of the switch module is connected to a neutral point of the three-phase motor. The control component is respectively connected to the three-phase motor, the battery pack, the three-phase inverter, and the switch module. The control component is configured to: obtain temperature information of the battery pack; obtain voltage information between a first end and a second end of the switch module when it is determined, according to the temperature information of the battery pack, that the battery pack requires self-heating; control the switch module according to the voltage information between the first end and the second end of the switch module, to achieve self-heating of the battery pack; obtain current information between the first end and the second end of the switch module when it is determined, according to the temperature information of the battery pack, that the battery pack does not require self-heating; and control the switch module according to the current information between the first end and the second end of the switch module, to prohibit the battery pack from self-heating.

In the battery self-heating system according to the embodiments of the present disclosure, the control component first obtains the temperature information of the battery pack first, and then determines whether the battery pack requires self-heating according to the temperature information; if the battery pack requires self-heating, the switch module is controlled to be closed according to the voltage between two ends of the switch module, to perform self-heating of a battery. If the battery pack does not require self-heating, the switch module is controlled to be opened according to the current between the two ends of the switch module, to prohibit the battery from self-heating. Therefore, the battery can be controlled to perform self-heating accurately to ensure that the battery can normally perform a self-heating operation, and improve charging and discharging efficiency of the battery.

To achieve the above objectives, an embodiment of a third aspect of the present disclosure provides an electric vehicle. The electric vehicle includes the battery self-heating system according to the foregoing embodiments.

According to the electric vehicle in this embodiment of the present disclosure, through the self-heating system in the foregoing embodiments, a battery can be accurately controlled to perform self-heating to ensure that the battery can normally perform a self-heat operation, and improve the charging and discharging efficiency of the battery.

Additional aspects and advantages of the present disclosure will be partially provided in the following description, and part will become apparent from the following description, or will be understood from practices of the present disclosure.

### BRIEF DESCRIPTION OF THE DRAWINGS

FIG. 1 is a flowchart of a control method for a battery self-heating system according to an embodiment of the present disclosure;
FIG. 2A is a structural block diagram of a battery self-heating system according to an embodiment of the present disclosure;
FIG. 2B is a structural block diagram of a battery self-heating system according to an embodiment of the present disclosure;
FIG. 3A is a structural block diagram of a battery self-heating system according to another embodiment of the present disclosure;
FIG. 3B is a structural block diagram of a battery self-heating system according to another embodiment of the present disclosure;
FIG. 4A is a structural block diagram of a battery self-heating system according to another embodiment of the present disclosure;
FIG. 4B is a structural block diagram of a battery self-heating system according to another embodiment of the present disclosure;
FIG. 5A is a structural block diagram of a battery self-heating system according to another embodiment of the present disclosure;
FIG. 5B is a structural block diagram of a battery self-heating system according to another embodiment of the present disclosure;
FIG. 6 is a flowchart of a control method of a battery self-heating system according to another embodiment of the present disclosure;
FIG. 7 is a schematic diagram of a carrier cycle signal according to a specific embodiment of the present disclosure;
FIG. 8 is a flowchart of a control method for a battery self-heating system according to another embodiment of the present disclosure;
FIG. 9 is a flowchart of a control method of a battery self-heating system according to another embodiment of the present disclosure;
FIG. 10 is a flowchart of a control method for a battery self-heating system according to a specific embodiment of the present disclosure;
FIG. 11 is a structural block diagram of a battery self-heating system according to another embodiment of the present disclosure;
FIG. 12 is a structural block diagram of a battery self-heating system according to another embodiment of the present disclosure;
FIG. 13 is a structural block diagram of a battery self-heating system according to another embodiment of the present disclosure;
FIG. 14 is a structural block diagram of a battery self-heating system according to another embodiment of the present disclosure;
FIG. 15 is a flowchart of a control method for a battery self-heating system according to another embodiment of the present disclosure;
FIG. 16 is a flowchart of a control method for a battery self-heating system according to another embodiment of the present disclosure;
FIG. 17 is a flowchart of a control method for a battery self-heating system according to another embodiment of the present disclosure;
FIG. 18 is a flowchart of a control method for a battery self-heating system according to another specific embodiment of the present disclosure;
FIG. 19 is a structural block diagram of a battery self-heating system according to still another embodiment of the present disclosure; and
FIG. 20 is a structural block diagram of an electric vehicle according to an embodiment of the present disclosure.

### DETAILED DESCRIPTION

The embodiments of the present disclosure are described below in detail. Examples of the embodiments are shown in the accompanying drawings, and same or similar reference signs in all the accompanying drawings indicate same or similar components or components having same or similar functions. The embodiments described below with reference to the accompanying drawings are exemplary, and are intended to explain the present disclosure and cannot be construed as a limitation to the present disclosure.

A battery self-heating system, a control method therefor, and an electric vehicle according to the embodiments of the present disclosure are described below with reference to the accompanying drawings.

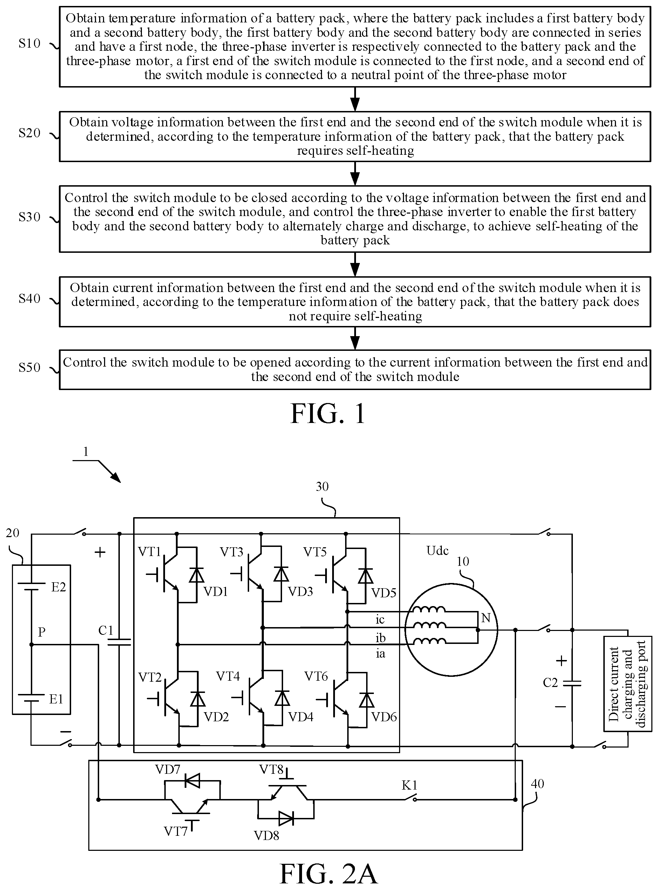

FIG. 1 is a flowchart of a control method for a battery self-heating system according to an embodiment of the present disclosure.

As shown in FIG. 1, the present disclosure provides a control method based on the foregoing battery self-heating system. The control method includes the following steps.

In S10: Temperature information of a battery pack is obtained. The battery pack includes a first battery body and a second battery body. The first battery body and the second battery body are connected in series and have a first node. The three-phase inverter is respectively connected to the battery pack and the three-phase motor. A first end of the switch module is connected to the first node, and a second end of the switch module is connected to a neutral point of the three-phase motor.

First, it is to be noted that, referring to FIG. 2A, a battery self-heating system 1 includes a three-phase motor 10, a battery pack 20, a three-phase inverter 30, and a switch module 40.

An input end of the three-phase inverter 30 is connected to the battery pack 20. Upper and lower bridge arm connection points of the three phase bridge arms of the three-phase inverter 30 are respectively correspondingly connected to three input ends of the three-phase motor 10. The three-phase inverter 30 may perform inversion processing on a direct current provided by the battery pack 20, and supply an alternating current obtained through inversion to the motor 10, so that the motor 10 can work normally. The battery self-heating system 1 further includes a direct current charging and discharging port. The direct current charging and discharging port may be connected to an external power supply to charge the battery pack 20, and may alternatively be connected to an external electric appliance, so that the battery pack 20 can supply power to an external electric appliance. The battery pack 20 in this embodiment includes a first battery body E1 and a second battery body E2. The first battery body E1 and the second battery body E2 are connected in series and have a first node P. The switch module 40 is arranged between the first node P and a neutral point N of the three-phase motor 10. The battery pack 20 can be controlled to perform self-heating by controlling a closed/open state of the switch module 40. Specifically, the switch module 40 includes multiple switch devices. By controlling the closed/open state of the switch devices in the switch module 40, a battery is accurately controlled to perform self-heating to ensure that the battery can normally perform a self-heating operation, and improve charging and discharging efficiency of the battery.

In addition, referring to FIG. 2A, the battery self-heating system 1 further includes a contactor arranged between the battery pack 20 and the three-phase inverter 30, so that whether the battery pack 20 is connected to the three-phase inverter 30 may be controlled by controlling the contactor. In addition, a contactor is further arranged between the neutral point N of the motor 10 and the direct current charging and discharging port. It may be understood that, the contactor may alternatively be configured to control a connection relationship between modules. In addition, the battery self-heating system 1 is further provided with a first capacitor C1 and a second capacitor C2, which may perform filtering processing on a voltage. The three-phase inverter 30 may include three phase bridge arms. Each phase bridge arm includes an upper bridge arm and a lower bridge arm that are formed by switch tubes, and each switch tube in the three phase bridge arms is further provided with a freewheeling diode. Specifically, A first phase bridge arm includes an upper bridge arm VT1 and a lower bridge arm VT2. A second phase bridge arm includes an upper bridge arm VT3 and a lower bridge arm VT4. A third phase bridge arm includes an upper bridge arm VT5 and a lower bridge arm VT6. Each switch tube is correspondingly provided with a freewheeling diode, that is, the upper bridge arm VT1 of the first phase bridge arm is correspondingly provided with a freewheeling diode VD1, the lower bridge arm VT2 of the first phase bridge arm is correspondingly provided with a freewheeling diode VD2, the upper bridge arm VT3 of the second phase bridge arm is correspondingly provided with a freewheeling diode VD3, the lower bridge arm VT4 of the second phase bridge arm is correspondingly provided with a freewheeling diode VD4, the upper bridge arm VT5 of the third phase bridge arm is correspondingly provided with a freewheeling diode VD5, and the lower bridge arm VT6 of the third phase bridge arm is correspondingly provided with a freewheeling diode VD6.

In S20: Voltage information between the first end and the second end of the switch module is obtained when it is determined, according to the temperature information of the battery pack, that the battery pack requires self-heating.

In S30: The switch module is controlled to be closed according to the voltage information between the first end and the second end of the switch module, and the three-phase inverter is controlled to enable the first battery body and the second battery body to alternately charge and discharge, to achieve self-heating of the battery pack.

In S40: Current information between the first end and the second end of the switch module is obtained when it is determined, according to the temperature information of the battery pack, that the battery pack does not require self-heating.

In S50: The switch module is controlled to be opened according to the current information between the first end and the second end of the switch module.

Specifically, referring to FIG. 1 and FIG. 2A, when a temperature of an environment in which an electric vehicle is located is relatively low, an operating temperature of the battery pack 20 may be affected to affect charging and discharging efficiency of the battery pack 20. In this embodiment, the battery pack 20 may be self-heated in a case that the temperature of the battery pack 20 is relatively low, to improve the charging and discharging efficiency of the battery pack 20. First, the temperature information of the battery pack 20 may be obtained, and whether the battery pack 20 requires heating may be determined according to the temperature information of the battery pack 20. Specifically, a temperature of the battery pack 20 may be determined according to the temperature information of the battery pack 20, and then the temperature of the battery pack 20 is compared with a preset temperature. If the temperature of the battery pack 20 is lower than the preset temperature, it may be determined that the battery pack does not require heating, and if the temperature of the battery pack 20 is higher than the preset temperature, it may be determined that the battery pack does not require heating. The preset temperature may be determined according to information such as a specification parameter of the battery pack 20, and may be set already at delivery. For example, the preset temperature may be 3°C, 4°C, or 5°C. Certainly, the preset temperature may alternatively be a temperature range, for example, [-3°C, 3°C].

In this embodiment, the temperature information of the battery pack 20 may be obtained through devices such as a temperature sensor. After the temperature information of the battery pack 20 is obtained, if it is determined that the battery pack 20 requires heating, the voltage information between the first end and the second end of the switch module is further obtained, and then the switch device in the switch module is controlled to be closed according to the voltage information, to prevent occurrence of an arc in a closing process, causing problems such as sintering. However, if it is determined that the battery pack 20 does not require heating, the current information between the first end and the second end of the switch module may be further obtained, and then the switch device in the switch module is controlled to be opened according to the current information, to prevent occurrence switch device arc in an opening process, causing problems such as sintering of the switch device.

In some embodiments, as shown in FIG. 2A, the switch module 40 includes a first switch tube VT7, a second switch tube VT8, and a first contactor K1. The first switch tube VT7 is correspondingly provided with a first freewheeling diode VD7. The second switch tube VT8 is correspondingly provided with a second freewheeling diode VD8. A first end of the first switch tube VT7 is connected to a first node P, and a second end of the first switch tube VT7 is connected to a second end of the second switch tube VT8. A first end of the second switch tube VT8 is connected to one end of the first contactor K1, and the other end of the first contactor K1 is connected to a neutral point N of a three-phase motor. An anode of the first freewheeling diode VD7 is connected to the second end of the first switch tube VT7, and a cathode of the first freewheeling diode VD7 is connected to the first end of the first switch tube VT7. An anode of the second freewheeling diode VD8 is connected to the second end of the second switch tube VT8, and a cathode of the second freewheeling diode VD8 is connected to the first end of the second switch tube VT8.

Specifically, it may be learned by referring to FIG. 2A that in this embodiment, both the first switch tube VT7 and the second switch tube VT8 are correspondingly provided with a freewheeling diode, so that a current can flow through the switch module 40 in a forward direction, and can flow through the switch module 40 in a reverse direction, thereby providing a current to the first battery body E1 in the battery pack 20 for self-heating, and providing a current to the second battery body E2 in the battery pack 20 for self-heating.

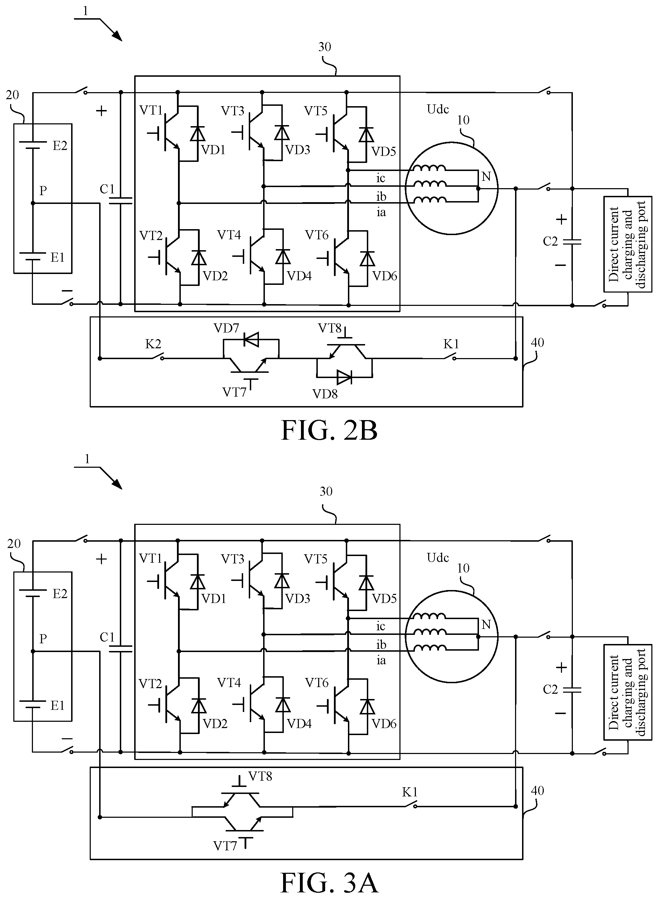

Optionally, in some embodiments, referring to FIG. 2B, a second contactor K2 may be added based on the original FIG. 2A, one end of the second contactor K2 is connected to the first node P, and the other end of the second contactor K2 is connected to the first end of the first switch tube VT7.

In some embodiments, as shown in FIG. 3A, the switch module 40 includes a first switch tube VT7, a second switch tube VT8, and a first contactor K1. A first end of the first switch tube VT7 is connected to a second end of the second switch tube VT8 and is connected to the first node P, a second end of the first switch tube VT7 is connected to a first end of the second switch tube VT8 and is connected to one end of the first contactor K1, and the other end of the first contactor K1 is connected to a neutral point N of the three-phase motor.

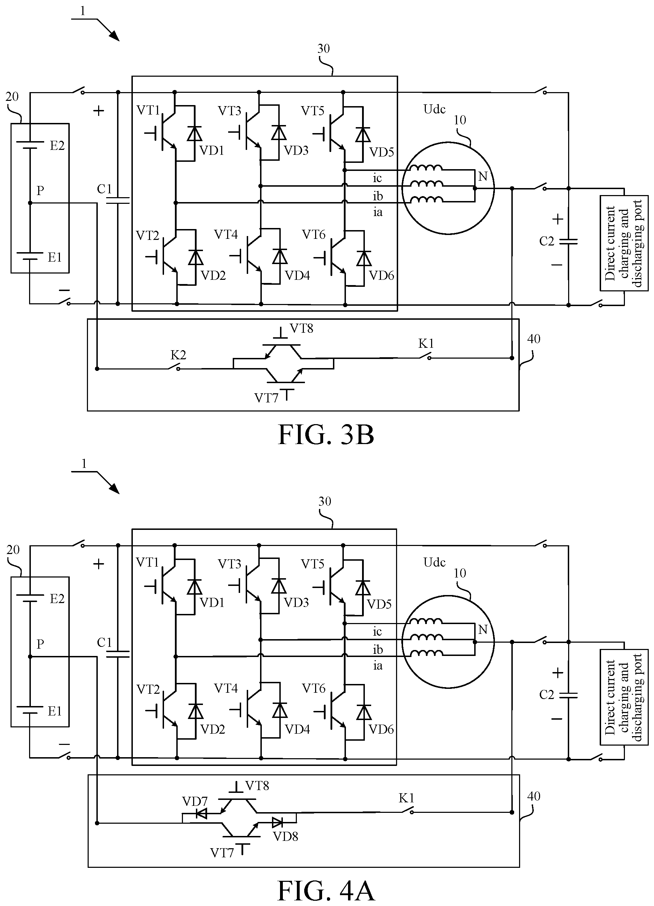

Optionally, in some embodiments, referring to FIG. 3B, a second contactor K2 may be added based on the original FIG. 3A. One end of the second contactor K2 is connected to the first node P, and the first end of the first switch tube VT7 is connected to the second end of the second switch tube VT8 and is connected to the other end of the second contactor K2.

Specifically, in this embodiment, the first switch tube VT7 and the second switch tube VT8 are reversely connected in parallel to form a branch, and then the parallel branch is connected in series to the first contactor K1. The first switch tube VT7 and the second switch tube VT8 are reversely connected in parallel, so that a current can flow through the switch module 40 in a forward direction to heat one battery body in the battery pack 20, and can flow through the switch module 40 in a reverse direction to heat the other battery body in the battery pack 20, thereby ensuring that the battery pack 20 can be normally self-heated.

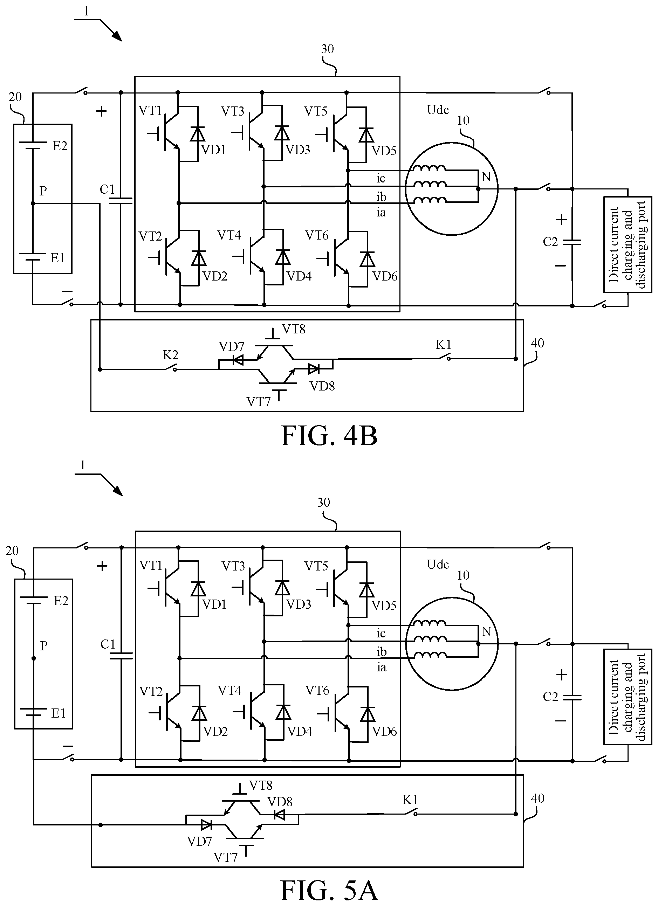

In this embodiment, as shown in FIG. 4A or FIG. 5A, the switch module 40 in this embodiment further includes a first freewheeling diode VD7 and a second freewheeling diode VD8. An anode of the first freewheeling diode VD7 is connected to the second end of the second switch tube VT8, and a cathode of the first freewheeling diode VD7 is connected to the first end of the first switch tube VT7. An anode of the second freewheeling diode VD8 is connected to the second end of the first switch tube VT7, and a cathode of the second freewheeling diode VD8 is connected to the first end of the second switch tube VT8.

Specifically, it may be learned by referring to FIG. 4A or FIG. 5A that the switch module 40 in this embodiment may further include a first freewheeling diode VT7 and a second freewheeling diode VT8. More specifically, the first freewheeling diode VD7 and the second freewheeling diode VD8 are respectively arranged on two switch tubes that are reversely connected in parallel and are arranged reversely, so as to further limit that a current that passes through the switch module 40 at a time only flows in one direction, but does not flow in the other direction, thereby ensuring that the first battery body E1 and the second battery body E2 in the battery pack 20 can be alternately self-heated.

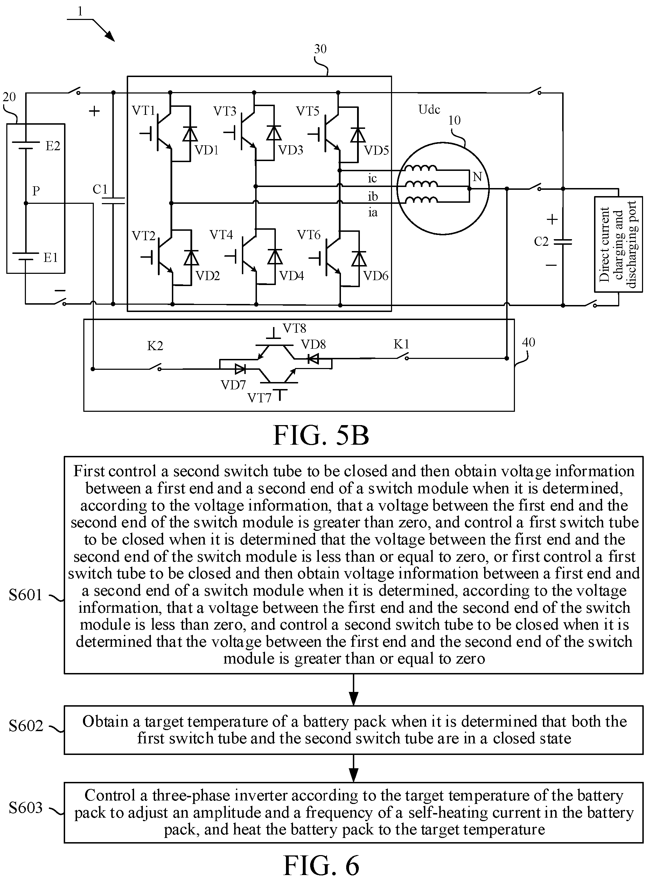

Optionally, in some embodiments, referring to FIG. 4B or FIG. 5B, a second contactor may be added based on the original FIG. 4A or FIG. 5A. As shown in FIG. 4B, one end of the second contactor K2 is connected to a first node P, and the other end of the second contactor K2 is connected to the first end of the first switch tube VT7. Additionally, as shown in FIG. 5B, one end of the second contactor K2 is connected to the first node P, and the other end of the second contactor K2 is connected to the second end of the second switch tube VT8.

For the specific battery self-heating system 1 shown in FIG. 2A, FIG. 3A, FIG. 4A, or FIG. 5A, this embodiment provides a corresponding specific control method, so as to control an open/closed state of various devices in the switch module 40 to complete self-heating control of the battery pack 20, thereby avoiding a problem of sintering caused by an arc during closing or opening various devices in the switch module 40. Specifically, when it is determined, according to the temperature information of the battery pack 20, that the battery pack 20 requires self-heating, if there is a contactor connected in series on a switch device branch, the contactor is first closed, and then the switch device is closed, so that the contactor is prevented from sintering. The following specifically describes the control method for the battery self-heating system 1 in this embodiment. In this embodiment, a branch corresponding to the switch module includes a first contactor K1 that is connected in series.

In this embodiment, after it is determined, according to the temperature information of the battery pack 20, that the battery pack 20 requires self-heating, the first contactor K1 is controlled to be closed.

Specifically, the first contactor K1 in this embodiment is connected in series with a branch corresponding to a switch tube. When the battery pack 20 requires self-heating, to prevent the contactor from sintering, the first contactor K1 may be controlled to be closed first, and then the switch device in the switch module 40 is controlled to be closed according to the voltage information between the first end and the second end of the switch module 40 in a case that the switch device is not controlled to be closed yet.

In some embodiments, as shown in FIG. 6, that the switch module is controlled according to voltage information between the first end and the second end of the switch module includes the following steps.

In S601: A second switch tube is first controlled to be closed and then voltage information between a first end and a second end of a switch module is obtained when it is determined, according to the voltage information, that a voltage between the first end and the second end of the switch module is greater than zero, and a first switch tube is controlled to be closed when it is determined that the voltage between the first end and the second end of the switch module is less than or equal to zero; or a first switch tube is first controlled to be closed and then voltage information between a first end and a second end of a switch module is obtained when it is determined, according to the voltage information, that a voltage between the first end and the second end of the switch module is less than zero, and a second switch tube is controlled to be closed when it is determined that the voltage between the first end and the second end of the switch module is greater than or equal to zero.

In S602: A target temperature of the battery pack is obtained when it is determined that both the first switch tube and the second switch tube are in a closed state.

In S603: A three-phase inverter is controlled according to the target temperature of the battery pack to adjust an amplitude and a frequency of a self-heating current in the battery pack, and the battery pack is heated to the target temperature.

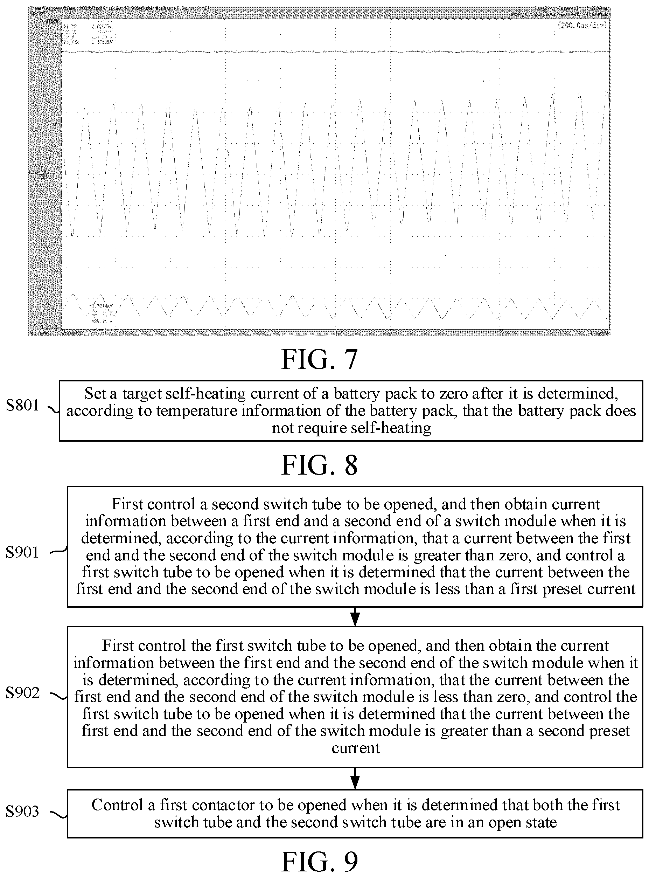

Specifically, descriptions are provided with reference to FIG. 2A, FIG. 3A, FIG. 4A, or FIG. 5A. After it is determined that the battery pack 20 requires heating and the voltage information between the first end and the second end of the switch module is obtained, a voltage between the first end and the second end of the switch module may be determined according to the voltage information. If the voltage between the first end and the second end of the switch module is greater than zero, it indicates that a current in the switch module 40 flows from the first end to the second end, for example, may flow from the first node P to a neutral point of the three-phase motor 10, and the second switch tube VT8 that is in an opposite direction of the current may be first controlled to be closed, to prevent an arc from being generated. If the first switch tube VT7 that is in the same direction of the current is controlled to be closed at this time, an arc is possibly generated to affect safety of the switch module 40. After the second switch tube VT8 is closed, the voltage information between the first end and the second end of the switch module is continued to be obtained, and the first switch tube VT7 may be controlled to be closed when the voltage between the first end and the second end of the switch module is less than or equal to zero, to avoid generation of an arc. It may be understood that, as shown in FIG. 7, the first switch tube VT7 and the second switch tube VT8 of this embodiment may be closed within a control period (that is, a carrier period), and reduce electric stress at a closing moment, so as to ensure that an impulse voltage and current cannot be generated in closing processes of the switch device, and the switch module 40 cannot be damaged.

When both the first switch tube VT7 and the second switch tube VT8 are in a closed state, specific self-heating control may be performed on the battery pack 20. First, the target temperature of the battery pack 20 may be obtained, that is, a temperature to which the battery pack 20 requires heating, and then a switch tube in the three-phase inverter 30 is controlled according to the target temperature to adjust an amplitude and a frequency of a self-heating current in the battery pack 20, so that the battery pack 20 can be controlled to be self-heated to a corresponding target temperature, thereby completing self-heating of the battery pack 20.

In this embodiment, as shown in FIG. 8, the control method for the battery self-heating system further includes the following steps.

In S801: A target self-heating current of a battery pack is set to zero after it is determined, according to temperature information of the battery pack, that the battery pack does not require self-heating.

Specifically, when the battery pack completes heating, that is, after it is determined, according to the temperature information of the battery pack, that the battery pack does not require self-heating, a target heating current of the battery pack may be set to zero, and the switch device and the contactor in the switch module are opened. In a case that a self-heating current is high, if the switch tube is suddenly opened, an arc is possibly generated to damage a heating module, so in this embodiment, after the target self-heating current of the battery pack is set to zero, the first switch tube and the second switch tube in the switch module are controlled to be opened according to current information between the first end and the second end of the switch module, thereby prohibiting the battery pack from performing self-heating.

Specifically, as shown in FIG. 9, that the switch module is controlled according to current information between the first end and the second end of the switch module includes the following steps.

In S901: A second switch tube is controlled to be opened and then current information between a first end and a second end of a switch module is obtained when it is determined, according to the current information, that a current between the first end and the second end of the switch module is greater than zero, and a first switch tube is controlled to be opened when it is determined that the current between the first end and the second end of the switch module is less than a first preset current.

In S902: The first switch tube is controlled to be opened and then the current information between the first end and the second end of the switch module is obtained when it is determined, according to the current information, that a current between the first end and the second end of the switch module is less than zero, and the first switch tube is controlled to be opened when it is determined that the current between the first end and the second end of the switch module is greater than a second preset current.

In S903: A second contactor is controlled to be opened when it is determined that both the first switch tube and the second switch tube are in an open state.

Specifically, descriptions are provided with reference to FIG. 2A, FIG. 3A, FIG. 4A, or FIG. 5A, when it is determined that the current between the first end and the second end of the switch module is greater than zero, it indicates that the current in the switch module mainly flows through the first switch tube VT7 currently, so the second switch tube VT8 may be first controlled to be opened. If the first switch tube VT7 is first controlled to be closed, an arc may possibly be generated to cause a problem of sintering. After the second switch tube VT8 is opened, the current information between the first end and the second end of the switch module is continued to be obtained, and the first switch tube VT7 is controlled to be opened when it is determined that the current between the first end and the second end of the switch module is less than a first preset current. The first preset current may be specifically limited according to a specification parameter of the battery pack, and may be, for example, positive or negative 5 amps. As long as it is determined that the current between the first end and the second end of the switch module falls near zero, the first switch tube VT7 may be controlled to be opened to avoid generation of an arc, so as to ensure that an impulse voltage and current cannot be generated in processes of opening the switch device and the contactor, and the switch module 40 cannot be damaged.

If it is determined that the current between the first end and the second end of the switch module is less than zero, it indicates that the current mainly flows through the second switch tube VT8 currently, so the first switch tube VT7 may be first controlled to be opened. If the second switch tube VT8 is first controlled to be closed, an arc may possibly be generated to cause of a problem of sintering. After the first switch tube VT7 is opened, the current information between the first end and the second end of the switch module is continued to be obtained, and the second switch tube VT8 is controlled to be opened when it is determined that the current between the first end and the second end of the switch module is greater than a second preset current. For descriptions of the second preset current, refer to the foregoing descriptions of the foregoing first preset current. Details are not described herein again. As long as it is determined that the current between the first end and the second end of the switch module falls near zero, the second switch tube VT8 may be controlled to be opened to avoid generation of an arc, so as to ensure that an impulse voltage and current cannot be generated during opening the switch device and the contactor, and the switch module 40 cannot be damaged.

If it is determined that both the first switch tube VT7 and the second switch tube VT8 are in an open state, the first contactor K1 may be further controlled to be opened, so as to prohibit the battery pack from performing self-heating.

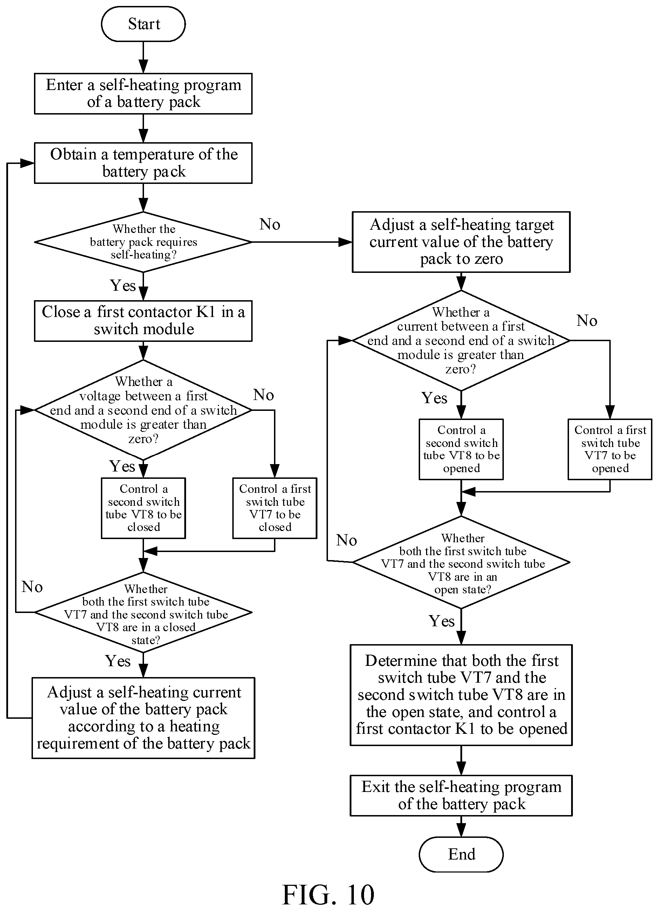

In a specific example, as shown in FIG. 10, first, after an electric vehicle enters a self-heating program of a battery pack, a temperature of the battery pack is obtained, and whether the battery pack requires self-heating is determined. If yes, the first contactor K1 in the switch module is closed, and then whether a voltage between the first end and the second end of the switch module is greater than zero is determined. If yes, the second switch tube VT8 is controlled to be closed. If no, the first switch tube VT7 is controlled to be closed, and whether both the first switch tube VT7 and the second switch tube VT8 are in a closed state is determined. If no, the voltage between the first end and the second end of the switch module is obtained again. If yes, a self-heating current value of the battery pack is adjusted according to a self-heating requirement of the battery pack to perform self-heating on the battery pack. Then, a temperature of the battery pack is obtained again and is determined. If it is determined that the battery pack does not require self-heating, the self-heating target value of the battery pack is adjusted to zero, and then whether the current between the first end and the second end of the switch module is greater than zero is determined. If yes, the second switch tube VT8 is controlled to be opened. If no, the first switch tube VT7 is opened, and then whether both the first switch tube VT7 and the second switch tube VT8 are in an open state is determined. If no, the current between the first end and the second end of the switch module is obtained again. If yes, the first contactor K1 is controlled to be opened, and then the self-heating program of the battery is exited.

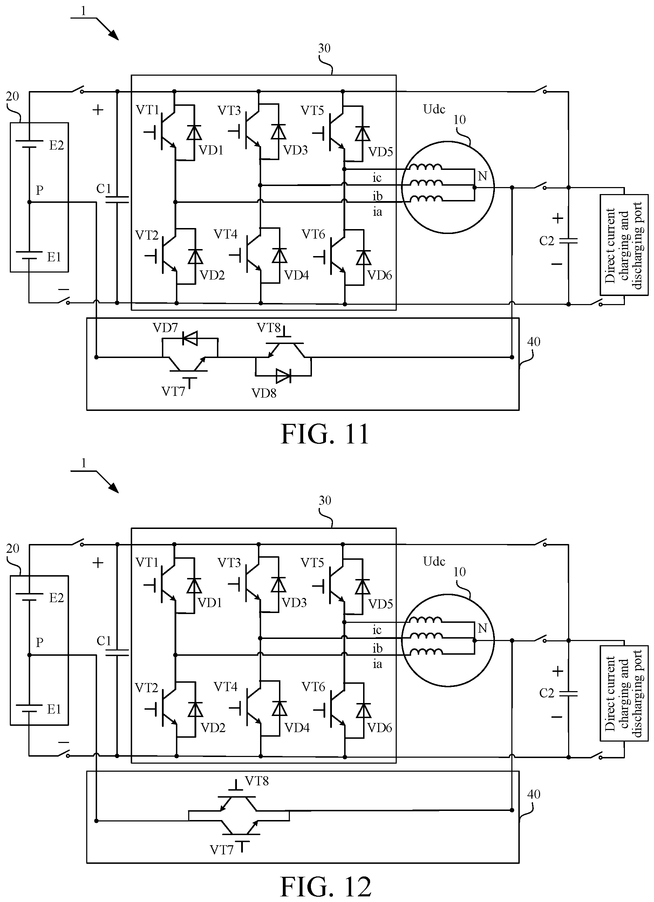

In some embodiments, as shown in FIG. 11, the switch module 40 includes a first switch tube VT7, a second switch tube VT8, a first freewheeling diode VD7, and a second freewheeling diode VD8. A first end of the first switch tube VT7 is connected to a first node P, and a second end of the first switch tube VT7 is connected to a second end of the second switch tube VT8. A first end of the second switch tube VT8 is connected to a neutral point N of the three-phase motor. An anode of the first freewheeling diode VD7 is connected to the second end of the first switch tube VT7, and a cathode of the first freewheeling diode VD7 is connected to the first end of the first switch tube VT7. An anode of the second freewheeling diode VD8 is connected to the second end of the second switch tube VT8, and a cathode of the second freewheeling diode VD8 is connected to the first end of the second switch tube VT8.

Specifically, it may be learned by referring to FIG. 11 that in this embodiment, both the first switch tube VT7 and the second switch tube VT8 are correspondingly provided with a freewheeling diode, so that a current can flow through the switch module 40 in a forward direction, and can flow through the switch module 40 in a reverse direction, thereby providing a current to the first battery body E1 in the battery pack 20 for self-heating, and providing a current to the second battery body E2 in the battery pack 20 for self-heating.

In some embodiments, as shown in FIG. 12, the switch module 40 includes a first switch tube VT7 and a second switch tube VT8. A first end of the first switch tube VT7 is connected to a second end of the second switch tube VT8 and is connected to a first node P, and a second end of the first switch tube VT7 is connected to a first end of the second switch tube VT8 and is connected to a neutral point N of the three-phase motor.

Specifically, in this embodiment, the first switch tube VT7 and the second switch tube VT8 are reversely connected in parallel, so that a current can flow through the switch module 40 in a forward direction to heat one battery body in the battery pack 20, and can flow through the switch module 40 in a reverse direction to heat the other battery body in the battery pack 20, thereby ensuring that the battery pack 20 can be normally self-heated.

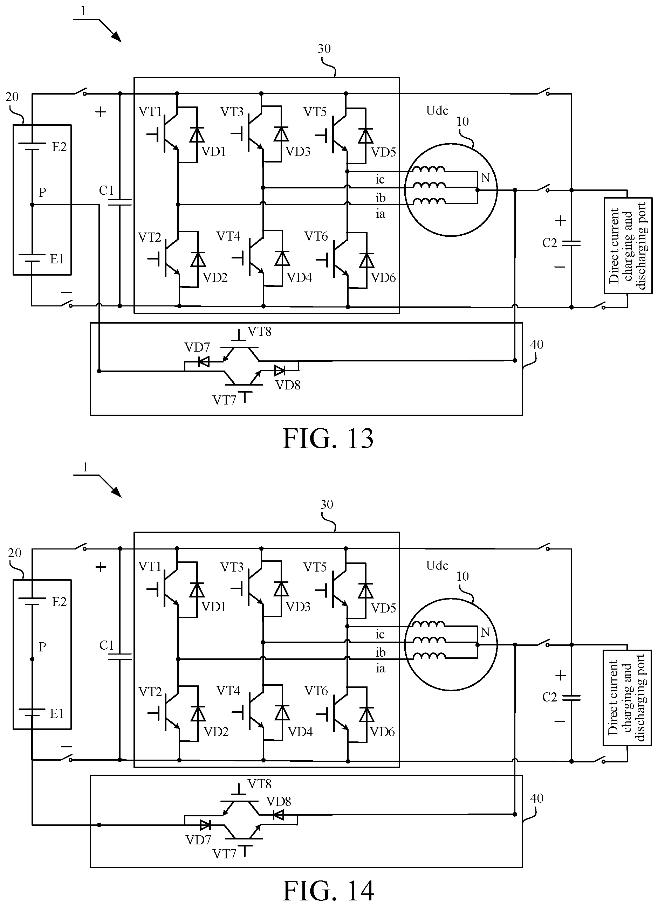

In this embodiment, it may be learned by referring to FIG. 13 or FIG. 14 that, the switch module 40 in this embodiment further includes a first freewheeling diode VD7 and a second freewheeling diode VD8. An anode of the first freewheeling diode VD7 is connected to the second end of the second switch tube VD8, and a cathode of the first freewheeling diode VD7 is connected to the first end of the first switch tube VT7. An anode of the second freewheeling diode VD8 is connected to the second end of the first switch tube VT7, and a cathode of the second freewheeling diode VD8 is connected to the first end of the second switch tube VT8.

Specifically, it may be learned by referring to FIG. 13 or FIG. 14 that the switch module 40 in this embodiment may further include a first freewheeling diode VT7 and a second freewheeling diode VT8. More specifically, the first freewheeling diode VD7 and the second freewheeling diode VD8 are respectively arranged on two switch tubes that are reversely connected in parallel and are arranged reversely, so as to further limit that a current that passes through the switch module 40 at a time only flows in one direction, but does not flow in the other direction, thereby ensuring that the first battery body E1 and the second battery body E2 in the battery pack 20 can be alternately self-heated.

For the specific battery self-heating system 1 shown in FIG. 11 to FIG. 14, this embodiment provides a corresponding specific control method, so as to control an open/closed state of various devices in the switch module 40 to complete self-heating control of the battery pack 20, thereby avoiding a problem of sintering caused by an arc during closing or opening the various devices in the switch module 40. Specifically, the following specifically describes the control method for the battery self-heating system 1 in this embodiment.

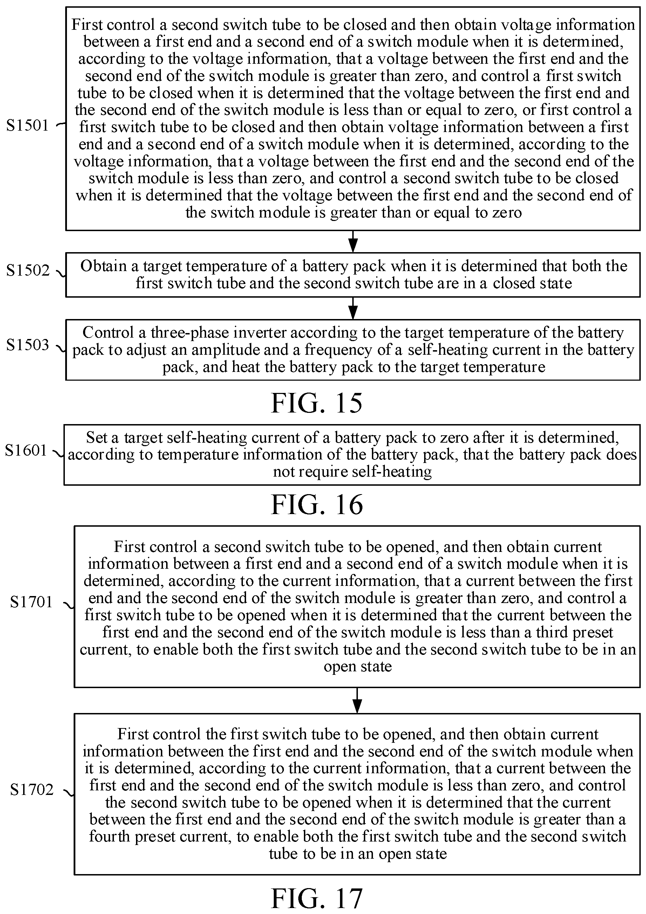

In some embodiments, as shown in FIG. 15, that the switch module is controlled according to voltage information between the first end and the second end of the switch module includes the following steps.

In S1501: A second switch tube is first controlled to be closed and then voltage information between a first end and a second end of a switch module is obtained when it is determined, according to the voltage information, that a voltage between the first end and the second end of the switch module is greater than zero, and a first switch tube is controlled to be closed when it is determined that the voltage between the first end and the second end of the switch module is less than or equal to zero; or a first switch tube is first controlled to be closed and then voltage information between a first end and a second end of a switch module is obtained when it is determined, according to the voltage information, that a voltage between the first end and the second end of the switch module is less than zero, and a second switch tube is controlled to be closed when it is determined that the voltage between the first end and the second end of the switch module is greater than or equal to zero.

In S1502: A target temperature of the battery pack is obtained when it is determined that both the first switch tube and the second switch tube are in a closed state.

In S1503: A three-phase inverter is controlled according to the target temperature of the battery pack to adjust an amplitude and a frequency of a self-heating current in the battery pack, and the battery pack is heated to the target temperature.

Specifically, descriptions are provided with reference to FIG. 11 to FIG. 14. After it is determined that the battery pack 20 requires heating and the voltage information between the first end and the second end of the switch module is obtained, a voltage between the first end and the second end of the switch module may be determined according to the voltage information. If the voltage between the first end and the second end of the switch module is greater than zero, it indicates that a current in the switch module 40 flows from the first end to the second end, that is, in the current flows from the first node P to a neutral point of the three-phase motor 10, and the second switch tube VT8 that is in an opposite direction of the current may be first controlled to be closed, to prevent an arc from being generated. If the first switch tube VT7 that is in the same direction of the current is controlled to be closed at this time, an arc is possibly generated to affect safety of the switch module 40. After the second switch tube VT8 is closed, the voltage information between the first end and the second end of the switch module is continued to be obtained, and the first switch tube VT7 may be controlled to be closed when the voltage between the first end and the second end of the switch module is less than or equal to zero, to avoid generation of an arc. It may be understood that, as shown in FIG. 7, the first switch tube VT7 and the second switch tube VT8 of this embodiment may be closed within a control period (that is, a carrier period), and reduce electric stress at a closing moment, so as to ensure that an impulse voltage and current cannot be generated in closing processes of the switch device and the contactor, and the switch module 40 cannot be damaged.

When both the first switch tube VT7 and the second switch tube VT8 are in a closed state, specific self-heating control may be performed on the battery pack 20. First, the target temperature of the battery pack 20 may be obtained, that is, a temperature to which the battery pack 20 requires heating, and then a switch tube in the three-phase inverter 30 is controlled according to the target temperature to adjust an amplitude and a frequency of a self-heating current in the battery pack 20, so that the battery pack 20 can be controlled to be self-heated to a corresponding target temperature, thereby completing self-heating of the battery pack 20.

In this embodiment, as shown in FIG. 16, the control method for the battery self-heating system further includes the following steps.

In S1601: A target self-heating current of a battery pack is set to zero after it is determined, according to temperature information of the battery pack, that the battery pack does not require self-heating.

Specifically, when the battery pack completes heating, that is, after it is determined, according to the temperature information of the battery pack, that the battery pack does not require self-heating, a target heating current of the battery pack may be set to zero, and the switch tube in the switch module is opened. In a self-heating process of the battery pack, both the first switch tube and the second switch tube are in a closed state, however, if the first contactor is directly opened, an arc is possibly generated to cause sintering, so in this embodiment, after the target self-heating current of the battery pack is set to zero, the first switch tube and the second switch tube in the switch module may be controlled to be opened according to current information between the first end and the second end of the switch module, thereby preventing a sintering phenomenon in a self-heating process of the battery pack.

Specifically, as shown in FIG. 17, that the switch module is controlled according to current information between the first end and the second end of the switch module includes the following steps.

In S1701: A second switch tube is first controlled to be opened, and then current information between a first end and a second end of a switch module is obtained when it is determined, according to the current information, that a current between the first end and the second end of the switch module is greater than zero, and a first switch tube is controlled to be opened when it is determined that the current between the first end and the second end of the switch module is less than a third preset current, to enable both the first switch tube and the second switch tube to be in an open state.

In S1702: The first switch tube is first controlled to be opened, and then the current information between the first end and the second end of the switch module is obtained when it is determined, according to the current information, that a current between the first end and the second end of the switch module is less than zero, and the second switch tube is controlled to be opened when it is determined that the current between the first end and the second end of the switch module is greater than a fourth preset current, to enable both the first switch tube and the second switch tube to be in an open state.

Specifically, descriptions are provided with reference to FIG. 11 to FIG. 14, when it is determined that the current between the first end and the second end of the switch module is greater than zero, it indicates that the current in the switch module mainly flows through the first switch tube VT7 currently, so the second switch tube VT8 may be first controlled to be opened. If the first switch tube VT7 is first controlled to be closed, an arc may possibly be generated to cause a problem of sintering. After the second switch tube VT8 is opened, the current information between the first end and the second end of the switch module is continued to be obtained, and the first switch tube VT7 is controlled to be opened when it is determined that the current between the first end and the second end of the switch module is less than a third preset current. The third preset current may be specifically limited according to a specification parameter of the battery pack, and may be, for example, positive or negative 5 amps. As long as it is determined that the current between the first end and the second end of the switch module falls near zero, the first switch tube VT7 may be controlled to be opened to avoid generation of an arc, so as to ensure that an impulse voltage and current cannot be generated in processes of opening the switch device and the contactor, and the switch module 40 cannot be damaged.

If it is determined that the current between the first end and the second end of the switch module is less than zero, it indicates that the current mainly flows through the second switch tube VT8 currently, so the first switch tube VT7 may be first controlled to be opened. If the second switch tube VT8 is first controlled to be closed, an arc may possibly be generated to cause of a problem of sintering. After the first switch tube VT7 is opened, the current information between the first end and the second end of the switch module is continued to be obtained, and the second switch tube VT8 is controlled to be opened when it is determined that the current between the first end and the second end of the switch module is greater than a fourth preset current. For descriptions of the fourth preset current, refer to the foregoing descriptions of the foregoing first preset current. Details are not described herein again. As long as it is determined that the current between the first end and the second end of the switch module falls near zero, the second switch tube VT8 may be controlled to be opened to avoid generation of an arc, so as to ensure that an impulse voltage and current cannot be generated during opening the switch device and the contactor, and the switch module 40 cannot be damaged. If it is determined that both the first switch tube VT7 and the second switch tube VT8 are in an open state, the battery pack can be prohibited from performing self-heating.

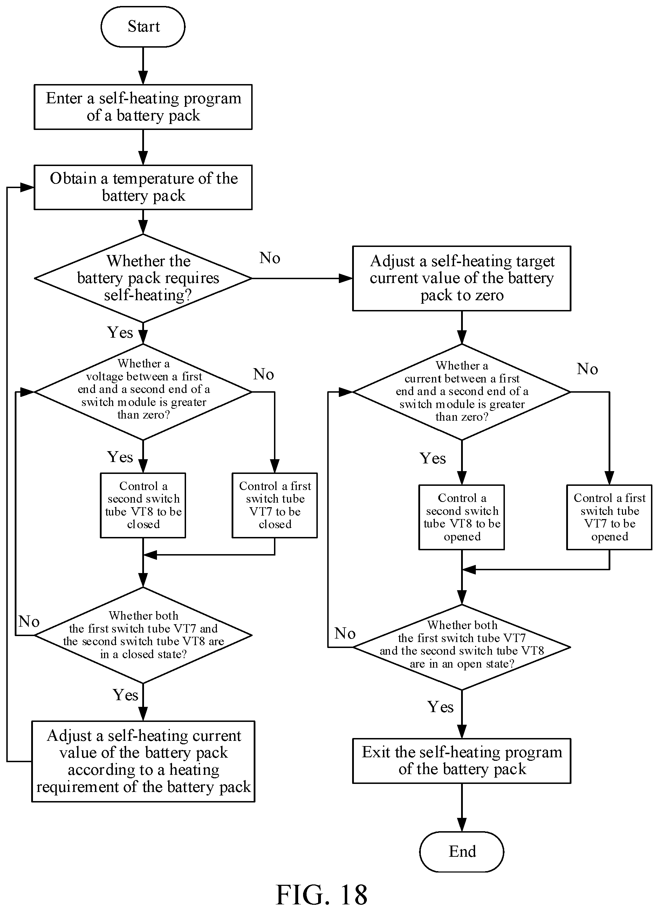

In a specific example, as shown in FIG. 18, first, after an electric vehicle enters a self-heating program of a battery pack, a temperature of the battery pack is obtained, and whether the battery pack requires self-heating is determined. If the battery pack requires self-heating, whether a voltage between the first end and the second end of the switch module is greater than zero is determined. If yes, the second switch tube VT8 is controlled to be closed. If no, the first switch tube VT7 is controlled to be closed, and then whether both the first switch tube VT7 and the second switch tube VT8 are in a closed state is determined. If no, the voltage between the first end and the second end of the switch module is continued to be determined. If yes, a self-heating current value of the battery pack is adjusted according to a self-heating requirement of the battery pack to perform self-heating on the battery pack. Then, a temperature of the battery pack is obtained again and is determined. If it is determined that the battery pack does not require self-heating, the self-heating target value of the battery pack is adjusted to zero, and then whether the current between the first end and the second end of the switch module is greater than zero is determined. If yes, the second switch tube VT8 is controlled to be opened. If no, the first switch tube VT7 is opened, and then whether both the first switch tube VT7 and the second switch tube VT8 are in an open state is determined. If no, the current between the first end and the second end of the switch module is continued to be determined. If yes, it indicates that the battery is prohibited from self-heating, so a self-heating program of the battery may be exited.

It is to be noted that, in the foregoing embodiments, the contactors may complete operations of closing and opening in a manner in which a magnetic field is generated by a current flowing through a coil to attract a core. In addition, in the foregoing embodiments, the switch tube may be a common thristor, turn-off thyristor, bi-directional thristors, metal oxide semiconductor (Metal Oxide Semiconductor, CMOS) tube, an insulated gate bipolar transistor (Insulated Gate Bipolar Transistor, IGBT) power device, silicon carbide (Silicon Carbide, SiC), or the like. In this embodiment, a first end of the switch tube may represent a collector of the transistor, and a second end of the switch tube may represent a transmitter of the transistor.

In conclusion, in the embodiments of the present disclosure, the switch device and the contactor in the switch module are quickly opened and closed, and an impulse voltage and an impulse current are not generated, so as to reduce electric stress at a closing moment or an opening moment of the switch module, achieve a best effect of closing or opening, reduce a damage probability of a device, and ensure a service life of a power device to a maximum extent.

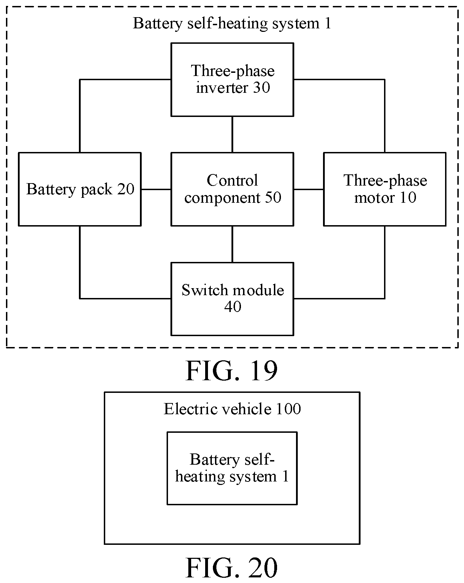

FIG. 19 is a structural block diagram of a battery self-heating system according to still another embodiment of the present disclosure.

Further, as shown in FIG. 19, the present disclosure provides a battery self-heating system 1. The battery self-heating system 1 includes: a three-phase motor 10, a battery pack 20, a three-phase inverter 30, a switch module 40, and a control component 50. Specifically, referring to FIG. 2A, the switch module 40 includes multiple switch tubes and a contactor. The contactor is connected in series to the multiple switch tubes. The battery pack 20 includes a first battery body E1 and a second battery body E2. The first battery body E1 and the second battery body E2 are connected in series and have a first anode P. The three-phase inverter 30 respectively is connected to the battery pack 20 and the three-phase motor 10. A first end of the switch module 40 is connected to the first node P. A second end of the switch module 40 is connected to a neutral point N of the three-phase motor. The control component 50 is respectively connected to the three-phase motor 10, the battery pack 20, the three-phase inverter 30, and the switch module 40. The control component 50 is configured to: obtain temperature information of the battery pack 20; obtain voltage information between the first end and the second end of the switch module 40 when it is determined, according to the temperature information of the battery pack 20, that the battery pack 20 requires self-heating; control the switch module according to the voltage information between the first end and the second end of the switch module 40, to achieve self-heating of the battery pack; obtain current information between the first end and the second end of the switch module when it is determined, according to the temperature information of the battery pack, that the battery pack does not require self-heating; and control the switch module according to the current information between the first end and the second end of the switch module to prohibit the battery pack from self-heating.

In some embodiments, the switch module includes a first switch tube, a second switch tube, a first freewheeling diode, a second freewheeling diode, and a first contactor. A first end of the first switch tube is connected to the first node, and a second end of the first switch tube is connected to a second end of the second switch tube. A first end of the second switch tube is connected to one end of the first contactor, and the other end of the first contactor is connected to the neutral point of the three-phase motor. An anode of the first freewheeling diode is connected to the second end of the first switch tube, and a cathode of the first freewheeling diode is connected to the first end of the first switch tube. An anode of the second freewheeling diode is connected to the second end of the second switch tube, and a cathode of the second freewheeling diode is connected to the first end of the second switch tube.

In some embodiments, the switch module includes a first switch tube, a second switch tube, and a first contactor. A first end of the first switch tube is connected to a second end of the second switch tube and is connected to the first node, a second end of the first switch tube is connected to a first end of the second switch tube and is connected to one end of the first contactor, and the other end of the first contactor is connected to the neutral point of the three-phase motor.

In some embodiments, the switch module further includes a first freewheeling diode and a second freewheeling diode, an anode of the first freewheeling diode is connected to the second end of the second switch tube, and a cathode of the first freewheeling diode is connected to the first end of the first switch tube. An anode of the second freewheeling diode is connected to the second end of the first switch tube, and a cathode of the second freewheeling diode is connected to the first end of the second switch tube.

In some embodiments, the control component is further configured to: control the first contactor to be closed after it is determined, according temperature information of the battery pack, that the battery pack requires self-heating.

In some embodiments, the control component is specifically configured to: first control a second switch tube to be closed and then obtain voltage information between a first end and a second end of a switch module when it is determined, according to the voltage information, that a voltage between the first end and the second end of the switch module is greater than zero, and control a first switch tube to be closed when it is determined that the voltage between the first end and the second end of the switch module is less than or equal to zero; or first control a first switch tube to be closed and then obtain voltage information between a first end and a second end of a switch module when it is determined, according to the voltage information, that a voltage between the first end and the second end of the switch module is less than zero, and control a second switch tube to be closed when it is determined that the voltage between the first end and the second end of the switch module is greater than or equal to zero; obtain a target temperature of a battery pack when it is determined that both the first switch tube and the second switch tube are in a closed state; and control a three-phase inverter according to the target temperature of the battery pack to adjust an amplitude and a frequency of a self-heating current in the battery pack, and heat the battery pack to the target temperature.

In some embodiments, the control component is further configured to: set a target self-heating current of a battery pack to zero after it is determined, according to temperature information of the battery pack, that the battery pack does not require self-heating.

In some embodiments, the control component is specifically configured to: first control the second switch tube to be opened, and then obtain current information between the first end and the second end of the switch module when it is determined, according to the current information, that a current between the first end and the second end of the switch module is greater than zero, and control the first switch tube to be opened when it is determined that the current between the first end and the second end of the switch module is less than a first preset current; first control the first switch tube to be opened, and then obtain the current information between the first end and the second end of the switch module when it is determined, according to the current information, that a current between the first end and the second end of the switch module is less than zero, and control the first switch tube to be opened when it is determined that the current between the first end and the second end of the switch module is greater than a second preset current; and control a first contactor to be opened when it is determined that both the first switch tube and the second switch tube are in an open state.

In some embodiments, the switch module includes a first switch tube, a second switch tube, a first freewheeling diode, and a second freewheeling diode. A first end of the first switch tube is connected to the first node, and a second end of the first switch tube is connected to a second end of the second switch tube. A first end of the second switch tube is connected to a neutral point of the three-phase motor. An anode of the first freewheeling diode is connected to the second end of the first switch tube, and a cathode of the first freewheeling diode is connected to the first end of the first switch tube. An anode of the second freewheeling diode is connected to the second end of the second switch tube, and a cathode of the second freewheeling diode is connected to the first end of the second switch tube.

In some embodiments, the switch module includes a first switch tube and a second switch tube. A first end of the first switch tube is connected to a second end of the second switch tube and is connected to a first node, and a second end of the first switch tube is connected to a first end of the second switch tube and is connected to a neutral point of the three-phase motor.

In some embodiments, the switch module further includes a first freewheeling diode and a second freewheeling diode. An anode of the first freewheeling diode is connected to the second end of the second switch tube, and a cathode of the first freewheeling diode is connected to the first end of the first switch tube. An anode of the second freewheeling diode is connected to the second end of the first switch tube, and a cathode of the second freewheeling diode is connected to the first end of the second switch tube.

In some embodiments, the control component is specifically configured to: first control a second switch tube to be closed and then obtain voltage information between a first end and a second end of a switch module when it is determined, according to the voltage information, that a voltage between the first end and the second end of the switch module is greater than zero, and control a first switch tube to be closed when it is determined that the voltage between the first end and the second end of the switch module is less than or equal to zero; or first control a first switch tube to be closed and then obtain voltage information between a first end and a second end of a switch module when it is determined, according to the voltage information, that a voltage between the first end and the second end of the switch module is less than zero, and control a second switch tube to be closed when it is determined that the voltage between the first end and the second end of the switch module is greater than or equal to zero; obtain a target temperature of a battery pack when it is determined that both the first switch tube and the second switch tube are in a closed state; and control a three-phase inverter according to the target temperature of the battery pack to adjust an amplitude and a frequency of a self-heating current in the battery pack, and heat the battery pack to the target temperature.

In some embodiments, the control component is further configured to: set a target self-heating current of a battery pack to zero after it is determined, according to temperature information of the battery pack, that the battery pack does not require self-heating.

In some embodiments, the control component is specifically configured to: first control the second switch tube to be opened, and then obtain current information between the first end and the second end of the switch module when it is determined, according to the current information, that a current between the first end and the second end of the switch module is greater than zero, and control the first switch tube to be opened when it is determined that the current between the first end and the second end of the switch module is less than a third preset current, to enable both the first switch tube and the second switch tube to be in an open state; and first control the first switch tube to be opened, and then obtain the current information between the first end and the second end of the switch module when it is determined, according to the current information, that a current between the first end and the second end of the switch module is less than zero, and control the second switch tube to be opened when it is determined that the current between the first end and the second end of the switch module is greater than a fourth preset current, to enable both the first switch tube and the second switch tube to be in an open state.

In conclusion, in the embodiments of the present disclosure, the switch device and the contactor in the switch module are quickly opened and closed, and an impulse voltage and an impulse current are not generated, so as to reduce electric stress at a closing moment or an opening moment of the switch module, achieve a best effect of closing or opening, reduce a damage probability of a device, and ensure a service life of a power device to a maximum extent.

It is to be noted that, for specific implementations of the battery self-heating system in this embodiment, refer to specific implementations of the control method for the battery self-heating system for in the foregoing embodiments. Details are not described herein again.

FIG. 20 is a structural block diagram of an electric vehicle according to an embodiment of the present disclosure.

Further, the present disclosure provides an electric vehicle 100. The electric vehicle 100 includes the battery self-heating system 1 in the foregoing embodiment.

According to the electric vehicle in this embodiment of the present disclosure, through the self-heating system in the foregoing embodiments, a battery can be accurately controlled to perform self-heating to ensure that the battery can normally perform a self-heat operation, and improve the charging and discharging efficiency of the battery.

In addition, other components and functions of the electric vehicle in this embodiment of the present disclosure are known to a person skilled in the art. To reduce redundancy, details are not described herein.

## Claims

1. A control method for a battery self-heating system, comprising:
obtaining temperature information of a battery pack, wherein the battery pack comprises a first battery body and a second battery body, the first battery body and the second battery body are connected in series and have a first node, a three-phase inverter is connected to the battery pack and a three-phase motor, a first end of a switch module is connected to the first node, and a second end of the switch module is connected to a neutral point of the three-phase motor;
obtaining voltage information between a first end and a second end of the switch module when it is determined, according to the temperature information of the battery pack, that the battery pack requires self-heating; controlling the switch module to be closed according to the voltage information between the first end and the second end of the switch module, and controlling the three-phase inverter to enable the first battery body and the second battery body to alternately charge and discharge, to achieve self-heating of the battery pack;
obtaining current information between the first end and the second end of the switch module when it is determined, according to the temperature information of the battery pack, that the battery pack does not require self-heating; and controlling the switch module to be opened according to the current information between the first end and the second end of the switch module.

2. The control method according to claim 1, wherein the switch module comprises a first switch tube, a second switch tube, a first freewheeling diode, a second freewheeling diode, and a first contactor, a first end of the first switch tube is connected to the first node, a second end of the first switch tube is connected to a second end of the second switch tube, a first end of the second switch tube is connected to one end of the first contactor, the other end of the first contactor is connected to the neutral point of the three-phase motor, an anode of the first freewheeling diode is connected to the second end of the first switch tube, a cathode of the first freewheeling diode is connected to the first end of the first switch tube, an anode of the second freewheeling diode is connected to the second end of the second switch tube, and a cathode of the second freewheeling diode is connected to the first end of the second switch tube.

3. The control method according to claim 1 or 2, wherein the switch module comprises a first switch tube, a second switch tube, and a first contactor, a first end of the first switch tube is connected to a second end of the second switch tube and is connected to the first node, a second end of the first switch tube is connected to a first end of the second switch tube and is connected to one end of the first contactor, and the other end of the first contactor is connected to the neutral point of the three-phase motor.

4. The control method according to claim 3, wherein the switch module further comprises a first freewheeling diode and a second freewheeling diode, an anode of the first freewheeling diode is connected to the second end of the second switch tube, a cathode of the first freewheeling diode is connected to the first end of the first switch tube, an anode of the second freewheeling diode is connected to the second end of the first switch tube, and a cathode of the second freewheeling diode is connected to the first end of the second switch tube.

5. The control method according to any one of claims 2 to 4, further comprising:
controlling the first contactor to be closed after it is determined, according to the temperature information of the battery pack, that the battery pack requires self-heating.

6. The control method according to claim 5, wherein the controlling the switch module according to the voltage information between the first end and the second end of the switch module comprises:
first controlling the second switch tube to be closed and then obtaining voltage information between the first end and the second end of the switch module when it is determined, according to the voltage information, that a voltage between the first end and the second end of the switch module is greater than zero, and controlling the first switch tube to be closed when it is determined that the voltage between the first end and the second end of the switch module is less than or equal to zero, or first controlling the first switch tube to be closed and then obtaining voltage information between the first end and the second end of the switch module when it is determined, according to the voltage information, that a voltage between the first end and the second end of the switch module is less than zero, and controlling the second switch tube to be closed when it is determined that the voltage between the first end and the second end of the switch module is greater than or equal to zero;
obtaining a target temperature of the battery pack when it is determined that both the first switch tube and the second switch tube are in a closed state; and
controlling the three-phase inverter according to the target temperature of the battery pack to adjust an amplitude and a frequency of a self-heating current in the battery pack, and heating the battery pack to the target temperature.

7. The control method according to claim 6, further comprising: setting a target self-heating current of the battery pack to zero after it is determined, according to the temperature information of the battery pack, that the battery pack does not require self-heating.

8. The control method according to claim 7, wherein the controlling the switch module according to the current information between the first end and the second end of the switch module comprises:
first controlling the second switch tube to be opened, and then obtaining the current information between the first end and the second end of the switch module when it is determined, according to the current information, that a current between the first end and the second end of the switch module is greater than zero, and controlling the first switch tube to be opened when it is determined that the current between the first end and the second end of the switch module is less than a first preset current;
first controlling the first switch tube to be opened, and then obtaining the current information between the first end and the second end of the switch module when it is determined, according to the current information, that a current between the first end and the second end of the switch module is less than zero, and controlling the first switch tube to be opened when it is determined that the current between the first end and the second end of the switch module is greater than a second preset current; and
controlling the first contactor to be opened when it is determined that both the first switch tube and the second switch tube are in an open state.

9. The control method according to any one of claims 1 to 8, wherein the switch module comprises a first switch tube, a second switch tube, a first freewheeling diode, and a second freewheeling diode, a first end of the first switch tube is connected to the first node, a second end of the first switch tube is connected to a second end of the second switch tube, a first end of the second switch tube is connected to the neutral point of the three-phase motor, an anode of the first freewheeling diode is connected to the second end of the first switch tube, a cathode of the first freewheeling diode is connected to the first end of the first switch tube, an anode of the second freewheeling diode is connected to the second end of the second switch tube, and a cathode of the second freewheeling diode is connected to the first end of the second switch tube.

10. The control method according to any one of claims 1 to 9, wherein the switch module comprises a first switch tube and a second switch tube, a first end of the first switch tube is connected to a second end of the second switch tube and is connected to the first node, and a second end of the first switch tube is connected to a first end of the second switch tube and is connected to the neutral point of the three-phase motor.

11. The control method according to claim 10, wherein the switch module further comprises a first freewheeling diode and a second freewheeling diode, an anode of the first freewheeling diode is connected to the second end of the second switch tube, a cathode of the first freewheeling diode is connected to the first end of the first switch tube, an anode of the second freewheeling diode is connected to the second end of the first switch tube, and a cathode of the second freewheeling diode is connected to the first end of the second switch tube.

12. The control method according to any one of claims 9 to 11, wherein the controlling the switch module according to the voltage information between the first end and the second end of the switch module comprises:
first controlling the second switch tube to be closed and then obtaining the voltage information between the first end and the second end of the switch module when it is determined, according to the voltage information, that a voltage between the first end and the second end of the switch module is greater than zero, and controlling the first switch tube to be closed when it is determined that the voltage between the first end and the second end of the switch module is less than or equal to zero, or first controlling the first switch tube to be closed and then obtaining voltage information between the first end and the second end of the switch module when it is determined, according to the voltage information, that a voltage between the first end and the second end of the switch module is less than zero, and controlling the second switch tube to be closed when it is determined that the voltage between the first end and the second end of the switch module is greater than or equal to zero;
obtaining a target temperature of the battery pack when it is determined that both the first switch tube and the second switch tube are in a closed state; and
controlling the three-phase inverter according to the target temperature of the battery pack to adjust an amplitude and a frequency of a self-heating current in the battery pack, and heating the battery pack to the target temperature.

13. The control method according to claim 12, further comprising: setting a target self-heating current of the battery pack to zero after it is determined, according to the temperature information of the battery pack, that the battery pack does not require self-heating.

14. The control method according to claim 13, wherein the controlling the switch module according to the current information between the first end and the second end of the switch module comprises:
first controlling the second switch tube to be opened, and then obtaining the current information between the first end and the second end of the switch module when it is determined, according to the current information, that a current between the first end and the second end of the switch module is greater than zero, and controlling the first switch tube to be opened when it is determined that the current between the first end and the second end of the switch module is less than a third preset current, to enable both the first switch tube and the second switch tube to be in an open state; and
first controlling the first switch tube to be opened, and then obtaining the current information between the first end and the second end of the switch module when it is determined, according to the current information, that a current between the first end and the second end of the switch module is less than zero, and controlling the second switch tube to be opened when it is determined that the current between the first end and the second end of the switch module is greater than a fourth preset current, to enable both the first switch tube and the second switch tube to be in an open state.

15. A battery self-heating system, comprising: a three-phase motor, a battery pack, a three-phase inverter, a switch module, and a control component, the battery pack comprising a first battery body and a second battery body, the first battery body and the second battery body being connected in series and having a first node, the three-phase inverter being connected to the battery pack and the three-phase motor, a first end of the switch module being connected to the first node, a second end of the switch module being connected to a neutral point of the three-phase motor, and the control component is connected to the three-phase motor, the battery pack, the three-phase inverter, and the switch module, and the control component is configured to:
obtain temperature information of the battery pack; obtain voltage information between a first end and a second end of the switch module when it is determined, according to the temperature information of the battery pack, that the battery pack requires self-heating; control the switch module according to the voltage information between the first end and the second end of the switch module, to achieve self-heating of the battery pack; obtain current information between the first end and the second end of the switch module when it is determined, according to the temperature information of the battery pack, that the battery pack does not require self-heating; and control the switch module according to the current information between the first end and the second end of the switch module, to prohibit the battery pack from self-heating.

16. An electric vehicle, comprising the battery self-heating system according to claim 15.
